# EUROPÄISCHE PATENTSCHRIFT

(11) **EP 0 837 079 B1**
(45) Veröffentlichungstag und Bekanntmachung des Hinweises auf die Patenterteilung: **14.08.2002**
(21) Anmeldenummer: 97117244.0
(22) Anmeldetag: 06.10.1997
(51) Int. Cl.: C08F 32/00, C08F 4/60, C08F 4/80, C08G 61/08, C07F 17/02

(54) **Palladium-Katalysatoren für die Polymerisation**
Palladium-catalyst for polymerisation
Catalyseur de polymérisation à base de palladium

(30) Priorität: 17.10.1996 DE 19642866
(43) Veröffentlichungstag der Anmeldung: 22.04.1998
(73) Patentinhaber: BAYER AG, 51368 Leverkusen (DE)
(72) Erfinder: Ostoja Starzewski, Karl-Heinz Aleksander, Dr., 61118 Bad Vilbel (DE); Denninger, Uwe, Dr., 51469 Bergisch Gladbach (DE)

(56) Entgegenhaltungen:
- EP-A- 0 445 755

## Beschreibung

Die Erfindung betrifft Palladium-Katalysatoren und die Verwendung von Palladium-Katalysatoren zur Polymerisation ethylenisch ungesättigter Verbindungen.

Durch Polymerisation von Cycloolefinen, gegebenenfalls in Gegenwart von acyclischen Olefinen, zugängliche Polymerisate sind in jüngerer Zeit interessant geworden, weil neue optische Anwendungen immer höhere Anforderungen an das Eigenschaftsprofil der zu verwendenden Thermoplasten stellen. Polycycloolefine sind thermisch außerordentlich stabil und optisch isotrop sowie hochbeständig gegenüber Wasser und organischen Lösungsmitteln.

Aufgrund ihrer hohen optischen Transparenz, niedriger Doppelbrechung und hoher Erweichungstemperaturen eignen sich Cycloolefin-Homo- und -Co-Polymerisate besonders als Rohstoffe für die Herstellung von optischen Linsen und Lichtwellenleitern sowie als Informationsspeichermedien, z.B. für Compact Disks.

In der Vergangenheit hat man z.B. versucht, Cycloolefine mit Hilfe von Ziegler-Systemen auf Basis von Titanverbindungen, Vanadiumverbindungen und Metallocenen zu polymerisieren, vgl. H. Cherdron et al., Angew. Makromol. Chem. 223 (1994), 121-133 und die dort zitierte Literatur. Da die Struktur- und Eigenschaftsvielfalt der erhaltenen Polycycloolefine mit der Zahl der für die Cycloolefinpolymerisation geeigneten Katalysatoren wächst und die bislang bekannten Polycycloolefine noch nicht alle Erwartungen erfüllen, bestand ein Bedarf an Cycloolefin-Katalysatoren, die sich von den bekannten Cycloolefin-Katalysatoren strukturell unterscheiden.

Die EP-A-445 755 beschreibt ein Verfahren zur Polymerisation von Cycloolefinen vom Norbornentyp in Gegenwart eines Katalysators auf Basis eines Übergangsmetalls der Gruppen Vb, VIb, VIIb oder VIII und eines Aluminoxans als Cokatalysator. Die bevorzugten Übergangsmetalle sind Nickel und Palladium. Die höchste Aktivität zeigt das Katalysatorsystem des Beispiels 1 (23,6 kg Polymer/g Nickel, bezogen auf 4 Stunden Polymerisationszeit). Für eine Polymerisation in technischem Maßstab wäre eine verbesserte Aktivität - insbesondere auch im Hinblick auf die teuren Palladiumkatalysatoren - wünschenswert.

Aus der WO95/14048 ist ein Verfahren zur Polymerisation von Cycloolefinen bekannt, wonach als Katalysator ein Ein- oder Mehrkomponenten-Katalysatorsystem auf Basis einer ionischen Übergangsmetall(VIII)-verbindung und eines Kettenübertragungsmittels verwendet wird. Die Polymerisation mit diesen Katalysatorsystemen erscheint zwar erfolgversprechend, aber für eine Anwendung in großtechnischem Maßstab sind die Katalysatoraktivitäten zu gering.

Eine weitere Aufgabe der Erfindung bestand also darin, für die Polymerisation von Cycloolefinen geeignete Katalysatoren mit verbesserter Aktivität bereitzustellen.

Es wurde nun gefunden, daß ausgewählte Palladiumverbindungen hochaktive Katalysatoren für die Polymerisation von Cycloolefinen sind: Das Gewichtsverhältnis von eingesetztem Katalysator zu erzeugtem Polymerisat wird so gering, daß sich eine Rückgewinnung des Katalysators nicht mehr lohnt und er im Polymerisat verbleiben kann.

Gegenstand der Erfindung ist also die Verwendung von Verbindungen der Formel 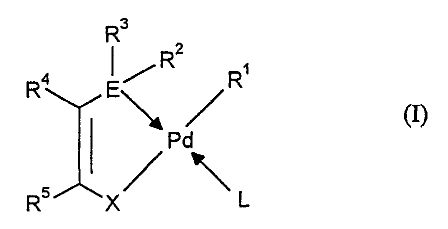 worin
- E: Stickstoff, Phosphor, Arsen oder Antimon,
- X: Sauerstoff, NR¹ oder Schwefel,
- R¹, R², R³: unabhängig voneinander C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl, C₁-C₂₀-Alkoxy, C₆-C₁₂-Aryloxy, C₁-C₂₀-Alkylamino, C₆-C₁₂-Arylamino, MSO₃-C₆-C₁₂-Aryl,
- R¹: zusätzlich Wasserstoff und
- R¹: vorzugsweise Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl,
- R⁴, R⁵: unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl, Chlor, OR⁶, COOR⁶, COOM, CONR⁶₂, COR⁶, SR⁶, SO₂R⁶, OSO₂R⁶, P(O)(OR⁶)_{2-y}R⁷_{y}, CN, NHR⁶, NR⁶₂, SO₃M,
- R⁶, R⁷: unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl,
- y: Null, 1 oder 2,
- M: 1 Kation-Äquivalent, ausgewählt aus Alkalimetall, ½Erdalkalimetall, Ammonium, Phosphonium, Thallium, (C₁-C₂₀-Alkyl)₄ammonium, (C₁-C₂₀-Alkyl)₄phosphonium, (C₁-C₂₀-Alkyl)_{4-z}(C₆-C₁₂-Aryl)_{z}phoshonium, (C₁-C₂₀-Alkyl)_{4-z}(C₆-C₁₂-Aryl)_{z}-ammonium,
- L: R⁸R⁹R¹⁰E¹(Y)ₙ, Alkylether, Ester, Alkyl- und Arylnitrile, Pyridin, Piperidin, Sulfoxide, Sulfone, Sulfimide, Sulfodiimide oder Schwefelylide,
- E¹: die unter E angegebenen Bedeutungen,
- R⁸-R¹⁰: unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl, OR¹¹, NR¹¹₂, MSO₃-C₆-C₁₂-Aryl,
- R¹¹: C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl,
- Y: R¹²R¹³C, R¹²N, Sauerstoff, Schwefel, =C=C=O, =C=C=S, =CPR¹R²R³
- R¹², R¹³: unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl,
- z: Null oder eine ganze Zahl von 1 bis 4 und
- n: Null oder - vorzugsweise - 1 bedeuten,
als Initiatoren für die Polymerisation ethylenisch ungesättigter Verbindungen, vorzugsweise für die Polymerisation und Copolymerisation von Cycloolefinen.

Der Begriff **Alkyl** in den Definitionen von R¹ bis R¹³ steht für geradkettiges oder verzweigtes Alkyl mit vorzugsweise 1 bis 12, besonders bevorzugt 1 bis 6 und insbesondere 1 bis 4 Kohlenstoffatomen. Beispielhaft seien Methyl, Ethyl, n-Propyl, i-Propyl, n-Butyl, sec.-Butyl, i-Butyl, t-Butyl, n-Pentyl, i-Pentyl, t-Pentyl, Hexyl, i-Octyl, n-Decyl und n-Dodecyl genannt.

Der Begriff **Alkenyl** in den Definitionen von R¹ bis R¹³ steht für geradkettiges oder verzweigtes Alkenyl mit vorzugsweise 2 bis 18, besonders bevorzugt 2 bis 12 und ganz besonders bevorzugt 2 bis 6 Kohlenstoffatomen. Beispielhaft seien Vinyl, Allyl, Propenyl-(2), 1-Butenyl, 2-Butenyl, 3-Butenyl, Ethinyl, 1-Propinyl, 2-Propinyl, 1-Butinyl, 2-Butinyl, 3-Butinyl, Methallyl, Crotyl und Cinnamyl genannt.

Der Begriff **Cycloalkyl** in den Resten R¹ bis R¹³ steht für Cycloalkyl mit vorzugsweise 3 bis 7, insbesondere 3, 5 oder 6 Kohlenstoffatomen. Beispielhaft seien unsubstituiertes oder substituiertes Cyclopropyl, Cyclobutyl, Cyclopentyl, Cyclohexyl und Cycloheptyl genannt.

Der Begriff **Aryl** in den Resten R¹ bis R¹³ steht für unsubstituiertes oder substituiertes Aryl mit vorzugsweise 6 bis 10 C-Atomen im Arylteil. Bevorzugte Beispiele umfassen Phenyl und Naphthyl. Die Arylgruppen können 1 bis 5 Substituenten aus der Reihe Halogen (insbesondere Chlor und/oder Fluor), C₁-C₄-Alkoxy, Cyano, Nitro oder Amino tragen. Der Begriff **Aryl** schließt auch Hetaryl ein, wobei Hetaryl für gegebenenfalls einfach oder mehrfach, gleich oder verschieden substituiertes Hetaryl mit 1 bis 5 Kohlenstoffatomen und 1 bis 4 Heteroatomen aus der Reihe Sauerstoff, Schwefel, Stickstoff steht und an welches gegebenenfalls ein 5- bis 6-gliedriger, gesättigter oder ungesättigter Carbocyclus anelliert ist, wobei Hetaryl vorzugsweise für jeweils gegebenenfalls 1- bis 4-fach, gleich oder verschieden substituiertes Pyridyl, Pyrimidyl, Pyrazinyl, Chinolyl, Isochinolyl, Pyrrolyl, Indolyl, Pyrazolyl, Imidazolyl, Benzimidazolyl, Triazolyl, Thienyl, Benzothienyl, Furyl, Benzofuryl, Thiazolyl, Benzothiazolyl, Isothiazolyl, Oxazolyl, Benzoxazolyl, Isoxazolyl, Thiadiazolyl, Isothiadiazolyl, Oxadiazolyl oder Isocadiazolyl steht, wobei als Hetarylsubstituenten genannt seien: Fluor, Chlor, Brom, Iod, Cyano, Nitro, Hydroxy, Mercapto, Amino, jeweils geradkettiges oder verzweigtes Alkoxy oder Alkylthio mit jeweils 1 bis 4 Kohlenstoffatomen, jeweils geradkettiges oder verzweigtes Halogenalkoxy oder Halogenalkylthio mit jeweils 1 bis 4 Kohlenstoffatomen und jeweils 1 bis 9 Fluor- und/oder Chloratomen, Phenyl, Phenoxy, Phenylthio, Phenyl-C₁-C₂-alkoxy oder Phenyl-C₁-C₂-alkylthio.

Der Begriff **Aralkyl** in den Resten R¹ bis R¹³ steht für Verbindungen mit vorzugsweise 1 bis 12, insbesondere 1 bis 6 C-Atomen im geradkettigen oder verzweigten Alkylteil und vorzugsweise Phenyl oder Naphthyl als Arylteil. Beispiele für solche Aralkylgruppen umfassen Benzyl, α-Methylbenzyl, α,α-Dimethylbenzyl, 2-Phenylethyl, α- und β-Naphthylmethyl. Diese Aralkylreste können 1 bis 3 Substituenten aus der Reihe Halogen (insbesondere Chlor und/oder Fluor), Nitro, Cyano, gegebenenfalls halogeniertes C₁-C₄-Alkyl oder -Alkoxy, wie beispielsweise Methyl, Ethyl, Trifluormethyl, Difluorchlormethyl, Difluormethyl, Trichlormethyl, Methoxy, Ethoxy, Trifluormethoxy, Difluorchlormethoxy oder Difluormethoxy, gegebenenfalls halogeniertes C₁-C₄-Alkylmercapto, wie beispielsweise Methylmercapto, Trifluormethylmercapto, Difluorchlormethylmercapto tragen.

Der Begriff **Alkylaryl** in den Resten R¹ bis R¹³ steht für die obengenannten Arylgruppen, die ihrerseits 1 bis 3 Substituenten aus der Reihe C₁-C₄-Alkyl, Halogen-C₁-C₂-alkyl (wie Trifluormethyl, Difluormethyl) tragen.

Der Begriff **Alkoxy** in den Resten R² und R³ steht für geradkettiges und verzweigtes Alkoxy mit vorzugsweise 1 bis 6, insbesondere 1 bis 4 C-Atomen. Bevorzugte Beispiele umfassen Methoxy, Ethoxy, n- und i-Propoxy, n-, i-, sek.- und tert.-Butoxy sowie Hexoxy.

Der Begriff **Aryloxy** in den Resten R² und R³ steht für Verbindungen mit vorzugsweise 1 bis 10 C-Atomen im Arylteil. Bevorzugte Beispiele sind Phenoxy und Naphthoxy. Die Aryloxygruppen können durch 1 bis 3 Substituenten aus der Reihe Halogen (vorzugsweise Chlor und/oder Fluor), C₁-C₄-Alkyl, Halogen-C₁-C₂alkyl (wie Di- und Trifluormethyl), Cyano, Nitro oder Amino tragen.

Der Begriff **Alkylamino** in den Resten R² und R³ steht für Monoalkylamino- und Dialkylaminoreste mit vorzugsweise jeweils 1 bis 4 Kohlenstoffatomen in den jeweiligen geradkettigen oder verzweigten Alkylteilen, wobei im Falle von Dialkylamino die beiden Reste gegebenenfalls gemeinsam mit dem Stickstoffatom, an welches sie gebunden sind, einen 5- oder 6-gliedrigen, gesättigten Ring bilden, welcher gegebenenfalls ein Sauerstoff-, Schwefel- oder Stickstoffatom enthält, und welcher gegebenenfalls durch 1 oder 2 Methylgruppen substituiert ist, oder für jeweils geradkettiges oder verzweigtes Alkenyloxy oder Alkinyloxy mit jeweils 3 bis 4 Kohlenstoffatomen steht. Der Begriff **Alkylamino** umfaßt also beispielsweise Methyl- und Dimethylamino, Ethyl- und Diethylamino, n-Propyl- und Di-npropylamino, i-Propyl- und Di-i-propylamino, Methylbutylamino, Ethylbutylamino, Pyrrolidino, Piperidino, Morpholino, Thiomorpholino, N-Methylpiperazino, 2,6-Dimethylmorpholino.

Der Begriff **Arylamino** in den Resten R² und R³ steht für

-NR¹⁴R¹⁵

worin
- R¹⁴: für Wasserstoff oder C₁-C₁₂-Alkyl, vorzugsweise Wasserstoff oder Methyl, und
- R¹⁵: für Aryl oder Hetaryl mit vorzugsweise 3 bis 10 C-Atomen, insbesondere für
(i) Phenyl, das gegebenenfalls einfach bis fünffach, gleichartig oder verschieden substituiert ist durch Halogenalkyl, Halogenalkoxy, Halogenalkylthio, Halogenalkylsulfinyl oder Halogenalkylsulfonyl mit jeweils 1 oder 2 Kohlenstoffatomen und 1 bis 5 gleichen oder verschiedenen Halogenatomen, durch Halogen, Cyano, Nitro, Amino, Hydroxy, Carbamoyl und/oder Thiocarbamoyl sowie durch gegebenenfalls einfach bis vierfach durch Halogen und/oder Halogenmethyl substituiertes, zweifach verknüpftes Dioxyalkylen mit 1 oder 2 Kohlenstoffatomen, wobei die Sauerstoffatome nicht benachbart sind, beispielsweise unsubstituiertes Phenyl selbst oder Phenyl steht, das einfach bis vierfach, gleichartig oder verschieden substituiert ist durch Difluormethyl, Trifluormethyl, Trifluorethyl, Difluormethoxy, Trifluormethoxy, Difluorchlormethoxy, Trifluorethoxy, Difluormethylthio, Difluorchlormethylthio, Trifluormethylthio, Trifluormethylsulfinyl, Trifluormethylsulfonyl, Fluor, Chlor, Brom, Cyano, Nitro, Carbamoyl und/oder Thiocarbamoyl sowie durch einen zweifach verknüpften Rest der Formel -O-CH₂-O-, -O-CF₂-O-, -O-CH₂-CH₂-O-, -O-CFCl-CFCl-O-, 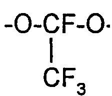 oder -O-CF₂-CF₂-O-; oder
(ii) Hetaryl mit 2 bis 10 C-Atomen und 1 bis 4 Heteroatomen aus der Reihe Stickstoff, Sauerstoff, Schwefel, wobei diese Hetarylreste einfach bis dreifach, gleichartig oder verschieden substituiert sein können durch Halogenalkyl, Halogenalkoxy, Halogenalkylthio, Halogenalkylsulfinyl oder Halogenalkylsulfonyl mit jeweils 1 oder 2 Kohlenstoffatomen und 1 bis 5 gleichen oder verschiedenen Halogenatomen, durch Halogen, Cyano, Nitro, Amino, Hydroxy, Carbamoyl und/oder Thiocarbamoyl, beispielsweise Pyrrolidinyl, Piperidinyl, Furyl, Thienyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Azepinyl, Pyrrolyl, Isopyrrolyl, Pyridyl, Piperazinyl, Pyridazinyl, Pyrimidinyl, Pyrazinyl, 1,3,5-, 1,2,4-, 1,2,3-Triazinyl, 1,2,4-, 1,3,2-, 1,3,6- und 1,2,6-Oxazinyl, Oxepinyl, Thiepinyl, 1,2,4-Diazepinyl, Chinolyl, Isochinolyl, Chinazolyl, Chinoxalyl, Cinnolyl, Tetrazolyl, Indolyl, Indazolyl, Benzimidazolyl, Benzothienyl, Benzofuryl, Benzthiazolyl, Benzoxazolyl, Thiadiazolyl, Isothiadiazolyl, Oxadiazolyl und Isoxadiazolyl und deren Substitutionsprodukte.

Bevorzugtes Arylamino ist Anilino.

Als Liganden L geeignete Alkylether umfassen vorzugsweise Diethylether, Dibutylether, Methyl-tert.-butylether, Tetrahydrofuran und Dioxan.

Als Liganden L geeignete Ester umfassen vorzugsweise Ester von C₁-C₈-Carbonsäuren mit ein- oder zweiwertigen C₁-C₁₈-Alkoholen, wie beispielsweise Essigsäure-, Propionsäure- und Buttersäureester von Methanol, Ethanol, Propanol, Butanol, Hexanol, Ethylenglykol, Butandiol-1,4.

Als Liganden L geeignete Sulfoxide und Sulfone umfassen beispielsweise Dimethylsulfoxid, Diethylsulfoxid, Diphenylsulfoxid, Dimethylsulfon, Diethylsulfon, Diphenylsulfon.

Als Liganden L geeignete Sulfimide und Sulfodiimide umfassen beispielsweise Diphenylsulfimid, Dimethylsulfimid, Diethyl-(N-trimethylsilyl)-sulfimid, Dimethylsulfodiimid.

### Als Liganden L geeignete Schwefelylide umfassen beispielsweise

Me₂SCH₂, Me₂S(O)CH₂, Me₂SCHSiMe₃, Me₂S(O)CHSiMe₃, Ph₂S(O)CH₂, Ph₂S(O)CHSiMe₃, Me₂SCHCMeO, Me₂SCHCPhO, Me₂S(O)CHCPhO.

Als Liganden L geeignete Alkyl- und Arylnitrile umfassen beispielsweise Acetonitril, Propionitril, Butyronitril und Benzonitril.

Bevorzugte Liganden L sind solche der Formel R⁸R⁹R¹⁰E¹Y. Beispiele solcher bevorzugten Liganden L umfassen Verbindungen der Formel 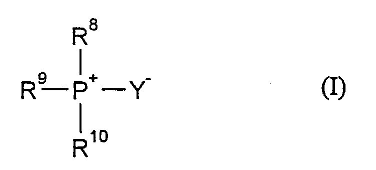 worin bedeuten
- R⁸, R⁹ und R¹⁰: unabhängig voneinander übliche Substituenten für phosphororganische Verbindungen, speziell für P-Ylide, insbesondere geradkettige oder verzweigte C₁-C₂₀-Alkylreste, C₆-C₁₂-Arylreste, C₂-C₃₀-Alkenylreste, C₃-C₈-Cycloalkylreste, C₆-C₁₂-Aryl-C₁-C₂₀-alkylreste,
- Y =:

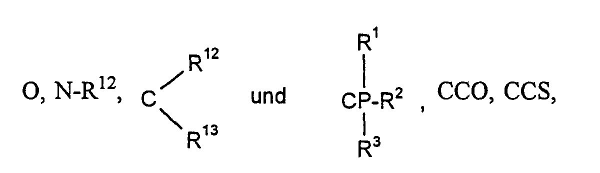

Vorzugsweise stehen R⁸, R⁹ und R¹⁰ unabhängig voneinander für Phenyl oder C₁-C₆-Alkyl, insbesondere Isopropyl, Y für CHR¹² und R¹² für Wasserstoff oder C₁-C₆-Alkyl.

In einer weiteren bevorzugten Ausführungsform steht Y für CH₂, CH-Phenyl, CH-Vinyl, CH-Propenyl und CH-Styryl.

Diese Liganden sind über das freie Elektronenpaar von Y mit dem Palladiumatom verbunden.

Weiterer Gegenstand der Erfindung sind die Verbindungen der Formel (I), worin n = 1.

Die Palladiumverbindungen (I) können aus Palladium-Ausgangsverbindungen hergestellt werden, die einen leicht substituierbaren Liganden besitzen. Beispiele solcher Liganden sind Cyclooctadien, Dimethylthioether, Dimethoxyethan und Tetramethylethylendiamin. Geeignete Palladium-Ausgangskomponenten sind also beispielsweise Verbindungen der Formel LgPdClR¹ oder deren Dimere, worin Lg den leicht substituierbaren Liganden bedeutet, wie beispielsweise Cyclooctadien-palladiummethylchlorid oder Bis(dimethylthioether-palladiummethylchlorid). Diese Palladium-Ausgangsverbindungen können in beliebiger Reihenfolge mit etwa äquimolaren Mengen eines Alkalimetallsalzes des (Thio)enols R²R³E-C(R⁴)=C(R⁵)-XH, z.B. des Natriumsalzes eines Phosphanoenolats, und etwa äquimolaren Mengen des Ligangen L umgesetzt werden. Die Umsetzung erfolgt vorzugsweise in einem inerten organischen Lösungsmittel wie Methylenchlorid oder Toluol. Das bei der Reaktion entstehende Alkalimetallhalogenid kann abfiltriert und das gewünschte Produkt (I) durch Zugabe von Ether oder Hexan ausgefällt oder durch teilweises Abziehen des Lösungsmittels und Kühlen der verbleibenden Lösung auskristallisiert werden.

Die Palladiumverbindungen (I) können als alleinige Polymerisationskatalysatoren eingesetzt werden. Häufig zeigt sich aber, daß die Mitverwendung von Cokatalysatoren ein weiter verbessertes Resultat ergibt.

Als Cokatalysatoren kommen prinzipiell Verbindungen mit saurem Charakter (sowohl Lewis- als auch Brönstedt-Säuren) in Frage. Solche sauren Verbindungen umfassen z.B. Aluminiumhalogenorganyle wie RAlCl₂, R₂AlCl, R₃Al₂Cl₃ (jeweils R = C₁-C₂₀-, vorzugsweise C₁-C₄-Alkyl). Bevorzugte Cokatalysatoren sind auch die in der US-PS 5 155 188 beschriebenen Verbindungen der Formeln

(RₙMO)ₐR'_{b}AlX_{c} bzw. (RO)ₐR'AlX_{c}

worin
- M: Silicium, Zinn, Germanium, Blei oder Aluminium,
- R, R': unabhängig voneinander Alkyl, Alkylen, Alkinyl, Aryl, Aralkyl, Aralkylen oder Aralkinyl mit je bis zu 18 C-Atomen, vorzugsweise C₁-C₃-Alkyl oder Phenyl und - falls M = Al - entweder R oder R' Halogen,
- X: Chlor, Fluor, Brom oder Iod, vorzugsweise Chlor,
- a: 0,5 bis 2,5, vorzugsweise 1 bis 0,75,
- b: 0,25 bis 2, vorzugsweise 0,5 bis 1,
- c: Null bis 2, vorzugsweise 0,72 bis 1,25,
- a+b+c =: 3,
- n: 2 (falls M = Al) oder 3,
bedeuten.

Durch Ersatz der Gruppen (RO) durch R₃SiO lassen sich effektive Siloxygruppenhaltige Cokatalysatoren herstellen.

Weitere bevorzugte Cokatalysatoren sind Aluminoxane, d.h. 1:1-Umsetzungsprodukte von Aluminiumorganylen mit Wasser, wobei auch andere Al/Wasser-Verhältnisse möglich sind, z.B. teilhydrolysiertes Trimethylaluminium, d.h. sogenanntes Methylaluminoxan (MAO), der Formel 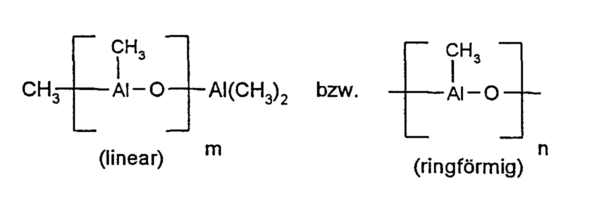 mit m = 2 bis 100 und n = 3 bis 30.

Die Aktivierung gelingt allgemein durch Einführung (zumeist voluminöser) schwach- oder nicht-koordinierender Anionen in das Ligandenfeld des Zentralmetalls, so daß nach heuristischer Betrachtung eine Koordinationsstelle für die Wechselwirkung mit dem zu polymerisierenden Monomer leicht freigemacht wird oder verfügbar ist.

Die Erzeugung solcher Anionen in der Umgebung des Zentralmetalls gelingt etwa durch Umsetzung mit Brönstedt-Säuren HX, wobei X z.B. Trifluormethylsulfonat sein kann. Andere cokatalytisch geeignete Anionen sind etwa PF₆⁻, SbF₆⁻, SnCl₃⁻ und Perchlorat.

Zur Einführung solcher Anionen können auch Salze des jeweiligen Anions verwendet werden, z.B. Alkali-, Erdalkali-, Thallium-, Silber-, Phosphonium- und Ammoniumsalze.

Weitere bevorzugte Cokatalysatoren umfassen Borverbindungen vom Typ BR₃ wie Tris-(pentafluorphenyl)-boran oder vom Typ HBR₄ bzw. MBR₄, wobei BR₄ Tetrafluorborat, Tetraphenylborat, Tetrakis-(pentafluorphenyl)borat oder Tetrakis-[3,5-di-(trifluormethyl)-phenyl]-borat bedeutet.

Weiterhin bevorzugt sind die Salze solcher Borate Kat⁺BR₄⁻, deren Kationen Kat⁺ etwa aus Na, K, Li, Mg, Ca, Ag, Tl, Triphenylmethyl, N⁺(C₁-C₁₂-Alkyl)₄ und insbesondere N,N-Dialkyl-anilinium-Ionen ausgewählt sind.

Katalysator und Cokatalysator können getrennt oder gemeinsam zugesetzt werden. Während der Reaktion können Katalysator und Cokatalysator in Form eines Komplexes vorliegen. Es ist möglich, diesen Komplex in situ zu bilden oder in einer getrennten Reaktion zu bilden und in dieser vorgebildeten Form (in Lösung) oder isoliert (als Feststoff) der Reaktion zuzugeben.

Mit den erfindungsgemäßen Katalysatoren zu polymerisierende Cycloolefine umfassen alle Cycloolefine, wie z.B. Cyclobuten, Cyclopenten, Cyclopentadien, aber auch polycyclische Cyclolefine, wie Dicyclopentadien oder solche, wie sie beispielsweise in EP-A-608 903 beschrieben sind, also
Bicyclo-2-heptene,
Tricyclo-3-decene,
Tricyclo-3-undecene,
Tetracyclo-3 -dodecene,
Pentacyclo-4-pentadecene,
Pentacyclopentadecadiene,
Pentahydro-3-pentadecene,
Pentacyclo-4-hexadecene,
Pentacyclo-3-hexadecene,
Hexacyclo-4-heptadecene,
Heptacyclo-5-eicocene,
Heptacyclo-4-eicocene,
Heptacyclo-5-heneicocene,
Octacyclo-5-dococene,
Nonacyclo-5-pentacosene,
Nonacyclo-6-hexacosene,
Cyclopentadien/Acenaphthylen-Addukte,
1,4-Methano-1.4.4a.9a-tetrahydrofluorene und
1,4-Methano-1.4.4a.5.10.10a-hexahydroanthracene,
wie z.B.
Bicyclo[2.2.1]hept-2-en,
6-Methylbicyclo[2.2.1]hept-2-en,
5,6-Dimethylbicyclo[2.2.1]hept-2-en,
1-Methylbicyclo[2.2.1]hept-2-en,
6-Ethylbicyclo[2.2.1]hept-2-en,
6-n-Butylbicyclo[2.2.1]hept-2-en,
6-Isobutylbicyclo[2.2.1]hept-2-en,
7-Methylbicyclo[2.2.1]hept-2-en,
Ethyliden-norbornen,
Vinyl-norbornen,
Tricyclo[4.3.0.1^{2,5}]-3-decen,
2-Methyltricyclo[4.3.0.1^{2,5}]-3-decen,
5-Methyltricyclo[4.3.0.1^{2,5}]-3-decen,
Tricyclo[4.3.0.1^{2,5}]-3-undecen,
10-Methyltricyclo[4.4.0.1^{2,5}]-3-undecen,
Tetracyclo[4.4.0.1^{2,5}.1^{7,10}]-3-dodecen,
8-Methyltetracyclo[4.4.0.1^{2,5}.1^{7,10}]-3-dodecen,
8-Ethyltetracyclo[4.4.0.1^{2,5}.1^{7,10}]-3-dodecen,
8-Propyltetracyclo[4.4.0.1^{2,5}.1^{7,10}]-3-dodecen,
8-Butyltetracyclo[4.4.0.1^{2,5}.1^{7,10}]-3-dodecen,
8-Isobutyltetracyclo[4.4.0.1^{2,5}.1^{7,10}]-3-dodecen,
8-Hexyltetracyclo[4.4.0.1^{2,5}.1^{7,10}]-3-dodecen,
8-Cyclohexyltetracyclo[4.4.0.1^{2,5}.1^{7,10}]-3-dodecen,
8-Stearyltetracyclo[4.4.0.1^{2,5}.1^{7,10}]-3-dodecen,
5,10-Dimethyltetracyclo[4.4.0.1^{2,5}.1^{7,10}]-3-dodecen,
2,10-Dimethyltetracyclo[4.4.0.1^{2,5}.1^{7,10}]-3-dodecen,
8,9-Dimethyltetracyclo[4.4.0.1^{2,5}.1^{7,10}]-3-dodecen,
8-Methyl-9-ethyltetracyclo[4.4.0.1^{2,5}.1^{7,10}]-3-dodecen,
11,12-Dimethyltetracyclo[4.4.0.1^{2,5}.1^{7,10}]-3-dodecen,
2,7,9-Trimethyltetracyclo[4.4.0.1^{2,5}.1^{7,10}]-3-dodecen,
9-Ethyl-2,7-dimethyltetracyclo[4.4.0.1^{2,5}.1^{7,10}]-3-dodecen,
9-Isobutyl-2,7-dimethyltetracyclo[4.4.0.1^{2,5}.1^{7,10}]-3-dodecen,
9,11,12-Trimethyltetracyclo[4.4.0.1^{2,5}.1^{7,10}]-3-dodecen,
9-Ethyl-11,12-dimethyltetracyclo[4.4.0.1^{2,5}.1^{7,10}]-3-dodecen,
9-Isobutyl-11,12-dimethyltetracyclo[4.4.0.1^{2,5}.1^{7,10}]-3-dodecen,
5,8,9,10-Tetramethyltetracyclo[4.4.0.1^{2,5}.1^{7,10}]-3-dodecen,
8-Ethylidentetracyclo[4.4.0.1^{2,5}.1^{7,10}]-3-dodecen,
8-Ethyliden-9-methyltetracyclo[4.4.0.1^{2,5}.1^{7,10}]-3-dodecen,
8-Ethyliden-9-ethyltetracyclo[4.4.0.1^{2,5},1^{7,10}]-3-dodecen,
8-Ethyliden-9-isopropyltetracyclo[4.4.0.1^{2,5}.1^{7,10}]-3-dodecen,
8-Ethyliden-8-butyltetracyclo[4.4.0.1^{2,5}.1^{7,10}]-3-dodecen,
8-n-Propylidentetracyclo[4.4.0.1^{2,5}.1^{7,10}]-3-dodecen,
8-n-Propyliden-9-methyltetracyclo[4.4.0.1^{2,5}.1^{7,10}]-3-dodecen,
8-n-Propyliden-9-ethyltetracyclo[4.4.0.1^{2,5}.1^{7,10}]-3-dodecen,
8-n-Propyliden-9-isopropyltetracyclo[4.4.0.1^{2,5}.1^{7,10}]-3-dodecen,
8-n-Propyliden-9-butyltetracyclo[4.4.0.1^{2,5}.1^{7,10}]-3-dodecen,
8-Isopropylidentetracyclo[4.4.0.1^{2,5}.1^{7,10}]-3-dodecen,
8-Isopropyliden-9-methyltetracyclo[4.4.0.1^{2,5}.1^{7,10}]-3-dodecen,
8-Isopropyliden-9-ethyltetracyclo[4.4.0.1^{2,5}.1^{7,10}]-3-dodecen,
8-Isopropyliden-9-isopropyltetracyclo[4.4.0.1^{2,5}.1^{7,10}]-3-dodecen,
8-Isopropyliden-9-butyltetracyclo[4.4.0.1^{2,5}.1^{7,10}]-3-dodecen,
8-Chlortetracyclo[4.4.0.1^{2,5}.1^{7,10}]-3-dodecen,
8-Bromtetracyclo[4.4.0.1^{2,5}.1^{7,10}]-3-dodecen,
8-Fluortetracyclo[4.4.0.1^{2,5}.1^{7,10}]-3-dodecen,
8,9-Dichlortetracyclo[4.4.0.1^{2,5}.1^{7,10}]-3-dodecen,
Pentacyclo[6.5.1.1^{3,6}.0^{2,7}.0^{9,13}]-4-pentadecen,
1,3-Dimethylpentacyclo[6.5.1.1^{3,6}.0^{2,7}.0^{9,13}]-4-pentadecen,
1,6-Dimethyl[6.5.1.1^{3,6}.0^{2,7}.0^{9,13}]-4-pentadecen,
14,15-Dimethyl[6.5.1.1^{3,6}.0^{2,7}.0^{9,13}]-4-pentadecen,
Pentacyclo[7.4.0.1^{2,5}1^{9,12}.0^{8,13}]-3-pentadecen,
Methyl-substituierte Pentacyclo[7.4.0.1^{2,5}.1^{9,12}.0^{8,13}]-3-pentadecen,
Pentacyclo[6.5.1.1^{3,6}.0^{2,7}.0^{9,13}]-4,10-pentadecedien,
Pentacyclo[8.4.0.1^{2,5}.1^{9,12}.0^{8,13}]-3-hexadecen,
11-Methylpentacyclo[8.4.0.1^{2,5}.1^{9,12}.0^{8,13}]-3-hexadecen,
11-Ethyl[8.4.0.1^{2,5}.1^{9,12}.0^{8,13}]-3-hexadecen,
10,11-Dimethyl[8.4.0.1^{2,5}.1^{9,12}.0^{8,13}]-3-hexadecen,
Pentacyclo[6.6.1.1^{3,6}.0^{2,7}.0^{9,14}]-4-hexadecen,
1,3-Dimethylpentacyclo[6.6.1.1^{3,6}.0^{2,7}.0^{9,14}]-4-hexadecen,
15,16-Dimethylpentacyclo[6.6.1.1^{3,6}.0^{2,7}.0^{9,14}]-4-hexadecen,
Hexacyclo[6.6.1.1^{3,6}.1^{10,13}.0^{2,7}.0^{9,14}]-4-heptadecen,
12-Methylhexacyclo[6.6.1.1^{3,6}.1^{10,13}.0^{2,7}.0^{9,14}]-4-heptadecen,
12-Ethylhexacyclo[6.6.1.1^{3,6}.1^{10,13}.0^{2,7}.0^{9,14}]-4-heptadecen,
12-Isobutylhexacyclo[6.6.1.1^{3,6}.1^{10,13}.0^{2,7}.0^{9,14}]-4-heptadecen,
1,6,10-Trimethylhexacyclo[6.6.1.1^{3,6}.1^{10,13}.0^{2,7}.0^{9,14}]-4-heptadecen,
Heptacyclo[8.7.0.1^{2,9}.1^{4,7}.1^{11,17}.0^{3,8}.0^{12,16}]-5-eicosen,
Heptacyclo[8.7.0.1^{3,6}.1^{10,17}.1^{12,15}.0^{2,7}.0^{11,16}]-4-eicosen und seine dimethylsubstituierten Derivate,
Heptacyclo[8.8.0.1^{2,9}.1^{4,7}.1^{11,18}.0^{3,8}.0^{12,17}]-5-heneicosen,
Heptacyclo[8.8.0.1^{4,7}.1^{11,18}.1^{13,16}.0^{3,8}.0^{12,17}]-5-heneicosen und seine trimethylsubstituierten Derivate,
15-Methylheptacyclo[8.8.0.1^{4,7}.1^{11,18}.1^{13,16}.0^{3,8}.0^{12,17}]-5-heneicosen,
5-Methyl-bicyclo[2.2.1]-hept-2-en,
5-C₁-C₂₀-Alkyl-bicyclo[2.2.1]-hept-2-en, wie z.B.
5-Ethyl-bicyclo[2.2.1]-hept-2-en,
5-Propyl-bicyclo[2.2.1]-hept-2-en,
5-Phenyl-bicyclo[2.2.1]hept-2-en,
5-Methyl-5-phenyl-bicyclo[2.2.1]hept-2-en,
5-B enzyl-bicyclo[2.2.1]hept-2-en,
5-Tolyl-bicyclo[2.2.1]hept-2-en,
2-(Ethylphenyl)-bicyclo[2.2.1]hept-2-en,
5-(Isopropylphenyl)-bicyclo[2.2.1]hept-2-en,
5-Biphenyl-bicyclo[2.2.1]hept-2-en,
5-(β-Naphthyl)-bicyclo[2.2.1]hept-2-en,
5-(α-Naphthyl)-bicyclo[2.2.1]hept-2-en,
5-(Anthracenyl)-bicyclo[2.2.1]hept-2-en,
5,6-Diphenyl-bicyclo[2.2.1]hept-2-en,
1,4-Methano-1.4.4a.9a-tetrahydrofluoren,
1,4-Methano-1.4.4a.5.10.10a-hexahydroanthracen,
8-Phenyltetracyclo[4.4.0.1^{2,5}.1^{7,10}]-3-dodecen,
8-Methyl-8-phenyltetracyclo[4.4.0.1^{2,5}.1^{7,10}]-3-dodecen,
8-Benzyl-tetracyclo[4.4.0.1^{2,5}.1^{7,10}]-3-dodecen,
8-Tolyl-tetracyclo[4.4.0.1^{2,5}.1^{7,10}]-3-dodecen,
8-(Ethylphenyl)-tetracyclo[4.4.0.1^{2,5}.1^{7,10}]-3-dodecen,
8-(Isopropylphenyl)-tetracyclo[4.4.0.1^{2,5}.1^{7,10}]-3-dodecen,
8,9-Diphenyl-tetracyclo[4.4.0.1^{2,5}.1^{7,10}]-3-dodecen,
8-(Biphenyl)-tetracyclo[4.4.0.1^{2,5}1^{7,10}]-3-dodecen,
8-(β-Naphthyl)-tetracyclo[4.4.0.1^{2,5}.1^{7,10}]-3-dodecen,
8-(α-Naphthyl)-tetracyclo[4.4.0.1^{2,5}.1^{7,10}]-3-dodecen und
8-(Anthracenyl)-tetracyclo[4.4.0.1^{2,5}.1^{7,10}]-3-dodecen.

Bevorzugte Cycloolefine sind auch solche, die durch Halogen, -CN, C₁-C₂₀-Alkyl, C₁-C₁₂-Alkoxy oder C₀-C₂₀-Alkylen-COOC₁-C₂₀-alkyl und C₀-C₂₀-Alkylen-O(O)C-C₁-C₂₀-alkyl, vorzugsweise ein- bis dreimal pro Molekül substituiert sind.

Die Cycloolefine können auch in Gegenwart von acyclischen Mono- oder Diolefinen, Alkinen und Kohlenmonoxid polymerisiert werden. Geeignete acyclische Olefine umfassen C₂-C₄₀-α-Olefine und C₄-C₂₄-Diolefine, wie z.B. Ethylen, Propylen, 1-Buten, 1-Penten, 1-Hexen, 3-Methyl-1-buten, 3-Methyl-1-penten, 4-Methyl-1-penten, 4,4-Dimethyl-1-hexen, 4,4-Dimethyl-1-hexen, 4,4-Dimethyl-1-penten, 4-Ethyl-1-hexen, 3-Ethyl-1-hexen, 1-Octen, 1-Decen, 1-Dodecen, 1-Tetradecen, 1-Hexadecen, 1-Octadecen, 1-Eicosen und Mischungen dieser α-Olefine sowie 1,3-Butadien, Isopren, 1,4-Pentadien, 1,4- und 1,5-Hexadien, 1,6-Heptadien, 1,6- und 1,7-Octadien, 1,8-Nonadien, 1,9-Decadien, 1,11-Dodecadien, 1,19-Eicodien und Mischungen dieser Diolefine. Auch Mischungen von α-Olefinen und Diolefinen sind geeignet.

Solche Olefine und Diolefine können weiter substituiert sein, beispielsweise mit Phenyl, substituiertem Phenyl, Halogen, der veresterten Carboxylgruppe, der Säureanhydridgruppe; Verbindungen dieser Art sind beispielsweise Chloropren, Styrol, Methylstyrol, Chlorstyrol, Fluorstyrol, Inden, 4-Vinyl-biphenyl, Vinylfluoren, Vinylanthracen, Methylmethacrylat, Ethylacrylat, Vinylsilan, Trimethylallylsilan, Vinylchlorid, Vinylidenchlorid, Tetrafluorethylen, Isobutylen, Vinylcarbazol, Vinylpyrrolidon, Acrylnitril, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen, Buten, Hexen, Octen, 1,5-Hexadien, 1,6-Octadien, Methylmethacrylat, ε-Caprolacton, δ-Valerolacton und Acetylen.

Für die Herstellung von Polymerisaten mit guter Verarbeitbarkeit empfiehlt es sich, mit den Cycloolefinen solche Comonomere zu copolymerisieren, die langkettige Substituenten tragen, wodurch die Glasübergangstemperatur nach Bedarf abgesenkt werden kann. Langkettige Alkylsubstituenten, insbesondere solche mit 8 bis 20 C-Atomen, sind bevorzugt.

Die Katalysatoren und gegebenenfalls Cokatalysatoren können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, Al₂O₃, MgCl₂, Cellulosederivate, Stärke und Polymere.

Die Polymerisation kann in Lösung, Slurry oder in Masse oder in der Gasphase durchgeführt werden. Dabei ist es möglich, kontinuierlich oder diskontinuierlich zu arbeiten. Der Katalysator kann vorgelegt und Monomer zudosiert werden. Es kann aber auch Monomer vorgelegt und der Katalysator zudosiert werden. Ebenso ist es möglich, Katalysator und Monomeres vorzulegen oder Katalysator und Monomer in zwei getrennten Strömen in die Reaktionszone zu bringen.

Die Polymerisation mit Hilfe der erfindungsgemäßen Katalysatoren kann in Masse oder in Lösung, vorzugsweise unter Ausschluß von Wasser und Sauerstoff erfolgen. Für die Polymerisation in Lösung geeignete organische Lösungsmittel umfassen Aromaten wie Toluol, Chlorbenzol, Nitrobenzol, halogenierte Aliphaten wie Methylenchlorid, Tetrachlorethan und deren Mischungen.

Die erfindungsgemäßen Katalysatoren können bei einem Batch-Verfahren in Mengen von einem Molverhältnis von 10⁻³ bis 10⁻⁶, bezogen auf zu polymerisierende Monomere, eingesetzt werden. Für den Fall, daß Cokatalysatoren mitverwendet werden sollen, beträgt das Molverhältnis Katalysator/Cokatalysator in der Regel 1 bis 10⁻⁶, vorzugsweise 10⁻¹ bis 10⁻⁴ für Al-haltige Cokatalysatoren und 10° bis 10⁻¹ für Bor-haltige Cokatalysatoren.

Die Polymerisationen können bei Temperaturen von 0 bis 200°C, vorzugsweise 20 bis 160°C, durchgeführt werden.

Die Polymeren können durch Nichtlösemittel, wie z.B. Methanol, Ethanol ausgefällt und dann getrocknet werden.

Die erfindungsgemäß zu verwendenden Katalysatoren I katalysieren auch die Arylierung und Alkylierung von Olefinen im Sinne der Heck-Reaktion.

### Beispiele

### A. Synthese der Palladiumkatalysatoren

### 1. Bis(Ylid)Palladiumkomplexe

### Darstellung von [PdPh(Ph₂PCHCPhO)(Ph₃PCH₂)]

Zu einer Lösung von 0,68 g (1,59 mmol) (TMEDA)Pd(Ph)I in THF gibt man eine Lösung von 0,52 g (1,59 mmol) [Ph₂PCH=C(O)Ph]Na in THF und läßt 1 h rühren. Anschließend versetzt man mit einer Lösung aus 0,44 g (1,59 mmol) Ph₃P=CH₂ in THF und läßt 3 h rühren. Alles Lösungsmittel wird im Vakuum entfernt und der Rückstand mit Toluol extrahiert. Der Extrakt wird im Vakuum eingeengt, mit Ether versetzt und bei 0°C kristallisiert. Die erhaltenen gelblichen Kristalle werden isoliert und im Vakuum getrocknet. Ausbeute: 0,63 g (52 %).

¹H-NMR {400.1 MHz, CD₂Cl₂}: δ (ppm) = 7.60 (m, 6H, Ph); 7.42 (m, 3H, Ph); 7.29 (m, 8H, Ph); 7.23-7.45 (m, 13H, Ph); 6.69 (m, 2H, Ph); 6.55 (m, 3H, Ph); 4.67 (s, 1H, CH); 1.72 (dd, 2H, J_{PH}= 11.9 Hz, J_{PH}= 7.6 Hz, CH₂); ³¹P{¹H}-NMR {161.9 MHz, CD₂Cl₂}: δ (ppm) = 36.9, 23.0.

### Darstellung von [PdMe(Ph₂PCHCPhO)(Ph₃PCH₂)]

Zu einer Suspension von 3,66 g (13,8 mmol) (COD)Pd(Me)Cl in Toluol gibt man eine Suspension von 4,51 g (13,8 mmol) [Ph₂PCH=C(O)Ph]Na in Toluol. Es bildet sich sofort eine gelbe Lösung, die 12 h gerührt wird. Es hat sich eine gelbliche Suspension gebildet. Diese wird mit einer Lösung von 3,82 g (13,8 mmol) Ph₃P=CH₂ in Toluol versetzt und 2 bis 3 h gerührt. Anschließend entfernt man alle flüchtigen Anteile im Vakuum und extrahiert den Rückstand mit warmem Methylenchlorid. Der erhaltene Extrakt wird im Vakuum eingeengt, mit Ether versetzt und zur Kristallisation auf -20°C gekühlt. Die erhaltenen schmutzig weißen Kristalle werden isoliert und im Vakuum getrocknet. Die Mutterlauge wird zur Trockne eingeengt, erneut in wenig Methylenchlorid aufgenommen, mit Ether versetzt und bei -20°C kristallisiert. Die erhaltenen Kristalle werden wie oben aufgearbeitet. Ausbeute: 7,27 g (76 %).

¹H-NMR {400.1 MHz, CD₂Cl₂}: δ (ppm) = 7.91-7.20 (m, 30H, Ph); 4.79 (s, 1H, CH); 1.66 (dd, 2H, J_{PH} = 12.3 Hz, J_{PH} = 7.6 Hz, CH₂); -0.17 (d, 3H, J_{PH} = 4.9 Hz, Me); ¹³C{¹H}-NMR {100.6 MHz, CD₂Cl₂}: δ (ppm) = 182.6 (d, J_{PC} = 22 Hz, CO); 140.8 (d, J_{PC} = 15 Hz, Ph); 138.3 (s, Ph); 137.9 (s, Ph); 133.7 (d, J_{PC} = 10 Hz, Ph); 132.5 (d, J_{PC} = 12 Hz, Ph); 132.3 (d, J_{PC} = 3 Hz, Ph); 128.9 (d, J_{PC} = 2 Hz, Ph); 128.7 (d, J_{PC} = 12 Hz, Ph); 128.1 (d, J_{PC} = 10 Hz, Ph); 128.1 (s, Ph); 127.4 (s, Ph); 127.2 (s, Ph); 75.5 (d, J_{PC} = 56 Hz, CH); 0.6 (dd, J_{PC} = 29 Hz, J_{PC} = 94 Hz, CH₂); -11.2 (d, J_{PC} = 6 Hz, Me); ³¹P{¹H}-NMR {161.9 MHz, CD₂Cl₂}: δ (ppm) = 34.6, 23.9.

### 2. Ylid-Phosphan-Palladiumkomplexe

### Darstellung von [PdPh(Ph₂PCHCPhO)(Ph₃P)]

Zu einer Lösung von 0,53 g (1,25 mmol) (TMEDA)Pd(Ph)I in Methylenchlorid gibt man eine Lösung von 0,40 g (1,24 mmol) [Ph₂PCH=C(O)Ph]Na in Methylenchlorid. Man erhält nach ca. einer Stunde eine milchig gelbe Suspension, die über Kieselgur filtriert wird. Das Filtrat wird anschließend mit 0,33 g (1,24 mmol) Triphenylphosphan versetzt und eine weitere Stunde gerührt. Alle flüchtigen Bestandteile werden im Vakuum entfernt und der Rückstand in Toluol extrahiert und filtriert. Das Filtrat wird im Vakuum eingeengt und mit Hexan versetzt. Dabei fällt ein gelblicher Niederschlag aus. Zur Vervollständigung der Fällung wird bei 0°C stehen gelassen. Der Niederschlag wird anschließend isoliert, mit Hexan gewaschen und im Vakuum getrocknet. Ausbeute: 0,78 g (87 %).

¹H-NMR {400.1 MHz, CD₂Cl₂}: δ (ppm) = 7.56 (m, 2H, Ph); 7.43-7.13 (m, 28H, Ph); 6.64 (d, 2H, J_{HH} = 6.7 Hz, Ph); 6.54 (m, 1H, Ph); 6.43 (t, 2H, J_{HH} = 7.5 Hz, Ph); 4.87 (br s, 1H, CH); ³¹P{¹H}-NMR {161.9 MHz, CD₂Cl₂}: δ (ppm) = 23.4 (AB-Syst.); 20.1 (AB-Syst.).

### Darstellung von [PdMe(Ph₂PCHCPhO)(Ph₃P)]

Zu einer Suspension von 3,52 g (10,8 mmol) [(PPh₃)Pd(Me)Cl]₂ in Toluol gibt man langsam eine Lösung von 3,89 g (10,8 mmol) [Ph₂PCH=C(O)Ph]Na in Toluol. Es bildet sich eine gelbe Suspension, die 4 h gerührt wird. Man filtriert über Kieselgur und entfernt das Lösungsmittel im Vakuum. Der Rückstand wird erneut in Toluol aufgenommen und filtriert. Das Lösungsmittel wird im Vakuum entfernt und der Rückstand mit Hexan und Ether gewaschen. Ausbeute: 3,98 g (54 %).

¹H-NMR {400.1 MHz, CD₂Cl₂}: δ (ppm) = 7.68-7.60 (m, 12H, Ph); 7.41-7.27 (m, 15H, Ph); 7.20-7.16 (mm, 3H, Ph); 4.83 (dd, 1H, J_{HP} = 4.6, J_{HP} = 0.8 Hz, CH); 0.16 (dd, 3H, J_{HP} = 4.4 Hz, Me); ³¹P{¹H}-NMR {161.9 MHz, CD₂Cl₂}: δ (ppm) = 28.5 (AB-Syst.); 24.2 (AB-Syst.).

### Darstellung von [PdMe(Ph₂PCHCPhO)(Et₃P)]

Analog wie [PdMe(Ph₂PCHCPhO)(Ph₃P)] wird [PdMe(Ph₂PCHCPhO)(Et₃P)] aus 1,48 g (5,38 mmol) [(PEt₃)Pd(Me)Cl]₂ und 1,76 g (5,38 mmol) [Ph₂PCH= C(O)Ph]Na in 46 %iger (1,34 g) Ausbeute erhalten.

¹H-NMR {400.1 MHz, CD₂Cl₂}: δ (ppm) = 7.77-7.75 (m, 12H, Ph); 7.58-7.53 (m, 4H, Ph); 7.31-7.27 (m, 6H, Ph); 7.23-7.30 (m, 3H, Ph); 4.81 (d, 1H, J_{HP} = 4.3 Hz, CH); 1.78 (dquint, 6H, J_{HP} = JHH = 7.6 Hz, J_{HP} = 1.5 Hz, CH₂); 1.14 (ddt, 9H, J_{HP} = 15,0 Hz, J_{HP} = 1.1 Hz, CH₃-Et); 0.24 (dd, 3H, J_{HP} = 5.3 Hz, J_{HP} = 5.2 Hz, CH₃Pd); ³¹P{¹H}-NMR {161.9 MHz, CD₂Cl₂}: δ (ppm) = 28.0 (AB-Syst.); 18.4 (AB-Syst.).

### 3. Ylid-Imin-Palladiumkomplexe

### Darstellung von [PdMe(Ph₂PCHCPhO)(Ph₃PNH)]

Analog wie [PdMe(Ph₂PCHCPhO)(Ph₃PCH₂)] wird [PdMe(Ph₂PCHC(O)Ph (Ph₃PNH)] aus 1,42 g (5,58 mmol) (COD)Pd(Me)Cl, 1,82 g (5,58 mmol) [Ph₂PCH= C(O)Ph]Na und 2,58 g (5,58 mmol) Ph₃P=NH in 73 %iger (2,83 g) Ausbeute erhalten.

¹H-NMR {400.1 MHz, CD₂Cl₂}: δ (ppm) = 7.90 (m, 6H, Ph); 7.51 (m, 7H, Ph); 7.37 (m, 6H, Ph); 7.27 (m, 8H, Ph); 7.09 (m, 1H, Ph); 7.03 (m, 2H, Ph); 4.56 (d, 1H, J_{PH} = 2.0 Hz, CH); 1.19 (br s, 1H, NH); 0.00 (d, 3H, J_{PH} = 2.1 Hz, Me); ³¹P{¹H}-NMR {161.9 MHz, CD₂Cl₂}: δ (ppm) = 34,3 (d, J_{PP} = 13 Hz); 32.4 (d).

### 4. Ylid-Pyridin-Palladiumkomplexe

### Darstellung von (PdMe(Ph₂PCHCPhO)(C₅H₅N)]

Analog wie [PdMe(Ph₂PCHCPhO)(Ph₃PCH₂)] wird [PdMe(Ph₂PCHCPhO) (C₅H₅N)] aus 1,00 g (3,77 mmol) (COD)Pd(Me)Cl, 1,32 g (3,77 mmol) [Ph₂PCH= C(O)Ph]Na und 0,30 ml (298 mg, 3,77 mmol) Pyridin in 48 %iger (920 mg) Ausbeute erhalten.

¹H-NMR {400.1 MHz, CD₂Cl₂}: δ (ppm) = 8.88 (d, 2H, J_{HH} = 4.6 Hz, o-H-py); 7.80 (m, 3H, p-H-Py und PH), 7.63 (m, 4H, Ph); 7.42 (m, 2H, Ph); 7.33 (m, 6H, Ph); 7.23 (m, 3H, m-H-Py und PH); 4.73 (d, 1H, J_{PH} = 1.7 Hz, CH); 0.36 (s, 3H, Me); ³¹P{¹H}-NMR {161.9 MHz, CD₂Cl₂}: δ (ppm) = 33.7:

### 5. Katalysator-Vorstufen

### Darstellung von [(COD)Pd(Me)Cl]

Zu einer Lösung aus 12.0 g (40.8 mmol) Na₂PdCl₄ in Methanol gibt man 12.0 ml (97.8 mmol) 1,5-COD, rührt 12 h, filtriert den erhaltenen gelben Feststoff ab und wäscht mit Methanol. Das Produkt wird in einem Gemisch aus Methylenchlorid/Methanol (1:1) suspendiert, mit 6.8 ml (48.9 mmol) SnMe₄ versetzt und 3h gerührt. Anschließend werden alle flüchtigen Bestandteile im Vakuum entfernt und der Rückstand mit Ether extrahiert. Der dann verbleibende Rückstand wird aus Methylenchlorid/Ether umkristallisiert. Ausbeute: 7,71 g (71 %).

Lit.: P.W.N.M. van Leeuwen, C.F. Roobeek, EP-A 380162 (1990); R.E. Rülke, I.M. Han, C.J. Elsevier, P.W.N.M. van Leeuwen, C.F. Roobeek, M. C. Zoutberg, Y. F. Wang, C.H. Stam, Inorg. Chim. Acta (1990) 169, 5.

### Darstellung von [(Ph₃P)Pd(Me)Cl]₂

Zu einer Lösung von 2.96 g (11.2 mmol) (COD)Pd(Me)Cl in Toluol gibt man 2.93 g (11.2 mmol) Triphenylphosphan und läßt 3h rühren. Anschließend filtriert man den enstandenen Niederschlag ab, wäscht mit Toluol und Hexan und trocknet im Vakuum.
Ausbeute: 3.89 g (83%)
Lit.: F.T. Ladipo, G.K. Anderson, Organometallics (1994) 13, 303.

### Darstellung von Na[Ph₂PCHCPhO]

Zu einer Suspension von 5.57 g (18.3 mmol) Ph₂PCH₂CPhO in Ether gibt man bei -78°C tropfenweise 18.3 ml (18.3 mmol) einer 1.0 molaren Lösung von Natriumbis(trimethylsilyl)amid in THF. Nach beendeter Zugabe wird auf Raumtemperatur erwärmt und die entstandene gelbe Lösung für 12 h gerührt. Anschließend werden alle flüchtigen Bestandteile imVakuum entfernt. Der Rückstand wird aus Ether umkristallisiert.
Lit.: analog M.D. Fryzuk, X. Gao, S.J. Rettig, Can. J. Chem. (1995) 73, 1175-80.

### Darstellung von (TMEDA)Pd(Me)Cl

Zu einer Lösung von 9.72 g (16.9 mmol) "PD(DBA)₂" in THF gibt man 2.95 g (25.4 mmol) TMEDA und anschließend 3.45 g (16.9 mmol) Iodbenzol. Die Lösung wird 1 h bei 40°C gerührt, über Celite filtriert und das Filtrat im Vakuum zur Trockne eingeengt. Der erhaltene orange Feststoff wird mit Ether gewaschen und im Vakuum getrocknet.
Ausbeute: 3.30 g (46 %)
Lit.: W. de Graf, J. van Wegen, J. Boersma, A.L. Spek, G. van Koten, Recl. Trav. Chim. Pays-Bas (1989) 108, 275.

### Verwendet Abkürzungen:

- DBA =: Dibenzylidenaceton
- TMEDA =: Tetramethylethylendiamin
- COD =: Cyclooctadien
- THF =: Tetrahydrofuran
- Me =: Methyl
- Ph =: Phenyl

### B. Polymerisationskatalytische Eigenschaften

### 1. Norbornen-Polymerisation

Wir haben die katalytische Wirksamkeit unserer Palladiumkatalysatoren für die Polymerisation von Norbornen bei Raumtemperatur und bei 80°C untersucht. Das Monomer/Katalysator-Molverhältnis war hierbei 1000 bis 100 000 zu 1. Eine vergleichbare Ermittlung der Reaktionsumsätze erfolgte nach einstündiger Reaktion durch Ausfällen in Ethanol, Isolieren des Polymerisats, Waschen mit Ethanol, Trocknen und Auswiegen (Tabellen 1 bis 5).

Die Komplexe werden durch Wechselwirkung mit ausgesuchten Cokatalysatoren deutlich aktiver. Während Tris(pentafluorphenyl)boran nur einen mäßig aktivierenden Effekt zeigt, wird bei 80°C mittels PdPh(Ph₂PCHCPhO)(Ph₃P) in Kombination mit Säure HB(C₆H₃(CF₃)₂)₄ in einer Stunde bei M/K = 1000 51 % des vorgelegten Norbornens polymerisiert. Eine beträchtliche Aktivitätssteigerung auf 2,7 t Polymer pro Mol Pd und Stunde erreicht man mit MAO als Cokatalysator.

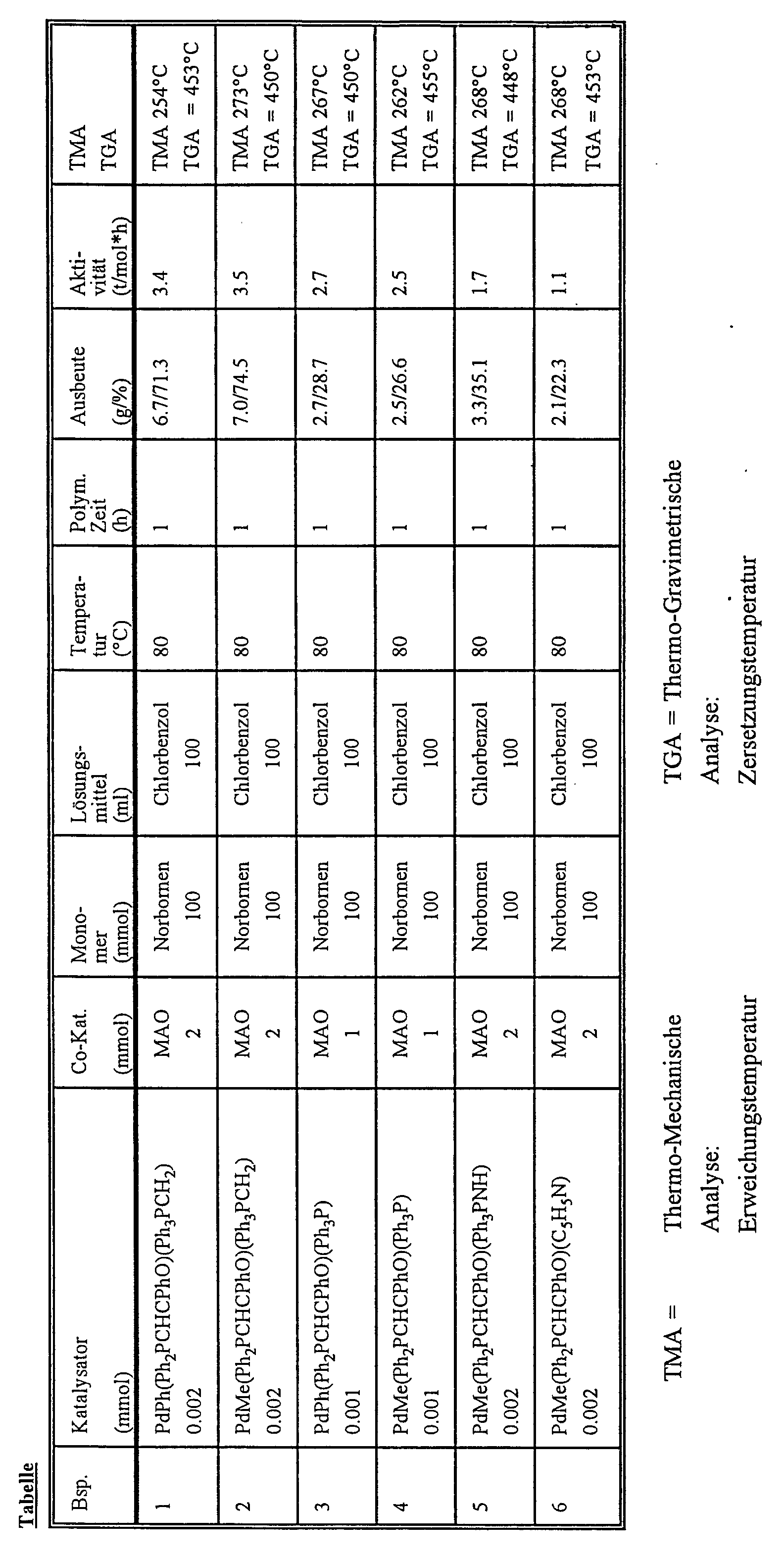

## Patentansprüche

1. Verwendung von Verbindungen der Formel 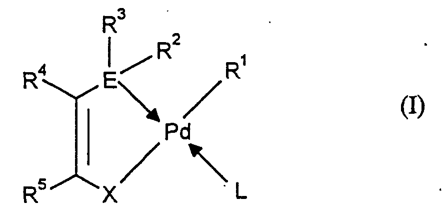 worin
E Stickstoff, Phosphor, Arsen oder Antimon,
X Sauerstoff, NR¹ oder Schwefel,
R¹, R², R³ unabhängig voneinander C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl, C₁-C₂₀-Alkoxy, C₆-C₁₂-Aryloxy, C₁-C₂₀-Alkylamino, C₆-C₁₂-Arylamino, M-SO₃-C₆-C₁₂-Aryl und
R¹ zusätzlich Wasserstoff,
R⁴, R⁵ unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl, Chlor, OR⁶, COOR⁶, COOM, CONR⁶₂, COR⁶, SR⁶, SO₂R⁶, OSO₂R⁶, P(O)(OR⁶)_{2-y}R⁷_{y}, CN, NHR⁶, NR⁶₂, SO₃M,
R⁶, R⁷ unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl,
y Null, 1 oder 2,
M Alkalimetall, ½Erdalkalimetall, Ammonium, Phosphonium, Thallium, (C₁-C₂₀-Alkyl)₄-ammonium, (C₁-C₂₀-Alkyl)₄-phosphonium, (C₁-C₂₀-Alkyl)_{4-z}(C₆-C₁₂-Aryl)_{z}-phosphonium, (C₁-C₂₀-Alkyl)_{4-z}(C₆-C₁₂-Aryl)_{z}-ammonium,
L R⁸R⁹R¹⁰E¹(Y)ₙ, Alkylether, Ester, Alkyl- und Arylnitrile, Pyridin, Piperidin, Sulfoxide, Sulfone, Sulfimide, Sulfodiimide oder Schwefelylide,
E¹ die unter E angegebenen Bedeutungen,
R⁸-R¹⁰ unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl, OR¹¹,
R¹¹ Wasserstoff, C₁-C₂₀-Alkyl, C₂-C₃₀-Alkenyl, C₃-C₈-Cycloalkyl, C₆-C₁-Aryl, C₆-C₁₂-Ar-C₁-C₂₀-alkyl, C₁-C₂₀-Alkyl-C₆-C₁₂-aryl,
Y R¹²R¹³C, R¹²N, Sauerstoff, Schwefel, =C=C=O, =C=C=S, =CPR¹R²R³,
R¹², R¹³ unabhängig voneinander Wasserstoff, C₁-C₂₀-Alkyl, C₂-C₃₀-Alkenyl, C₃-C₈-Cycloalkyl, C₆-C₁₂-Aryl, C₆-C₁₂-Ar-C₁-C₂₀-alkyl, C₁-C₂₀-Alkyl-C₆-C₁₂-aryl,
z Null oder eine ganze Zahl von 1 bis 4 und
n Null oder 1 bedeuten,
als Initiatoren für die Polymerisation ethylenisch ungesättigter Verbindungen.

2. Verwendung nach Anspruch 1 für die Polymerisation und Copolymerisation von Cycloolefinen.

3. Verwendung nach Anspruch 1 für die Copolymerisation von Cycloolefinen und acyclischen Olefinen.

4. Verwendung nach Anspruch 1 in Gegenwart eines sauren Cokatalysators.

5. Verwendung nach Anspruch 1 bei einer Temperatur von 0 bis 200°C.

6. Verbindungen gemäß Formel (I) nach Anspruch 1, worin n = 1.

## Claims

1. Use of compounds of formula 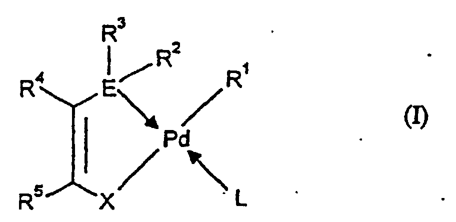 wherein
E represents nitrogen, phosphorus, arsenic or antimony,
X represents oxygen, NR¹ or sulfur,
R¹, R², R³ each independently of the others represents C₁-C₂₀-alkyl, C₂-C₃₀-alkenyl, C₃-C₈-cycloalkyl, C₆-C₁₂-aryl, C₆-C₁₂-Ar-C₁-C₂₀-alkyl, C₁-C₂₀-alkyl-C₆-C₁₂-aryl, C₁-C₂₀-alkoxy, C₆-C₁₂-aryloxy, C₁-C₂₀-alkylamino, C₆-C₁₂-arylamino, M-SO₃-C₆-C₁₂-aryl, and
R¹ additionally represents hydrogen,
R⁴, R⁵ each independently of the other represents hydrogen, C₁-C₂₀-alkyl, C₂-C₃₀-alkenyl, C₃-C₈-cycloalkyl, C₆-C₁₂-aryl, C₆-C₁₂-Ar-C₁-C₂₀-alkyl, C₁-C₂₀-alkyl-C₆-C₁₂-aryl, chlorine, OR⁶, COOR⁶, COOM, CONR⁶₂, COR⁶, SR⁶, SO₂R⁶, OSO₂R⁶, P(O)(OR⁶)_{2-y}R⁷_{y}, CN, NHR⁶, NR⁶₂, SO₃M,
R⁶, R⁷ each independently of the other represents hydrogen, C₁-C₂₀-alkyl, C₂-C₃₀-alkenyl, C₃-C₈-cycloalkyl, C₆-C₁₂-aryl, C₆-C₁₂-Ar-C₁-C₂₀-alkyl, C₁-C₂₀-alkyl-C₆-C₁₂-aryl,
y represents zero, 1 or 2,
M represents alkali metal, ½alkaline earth metal, ammonium, phosphonium, thallium, (C₁-C₂₀-alkyl)₄-ammonium, (C₁-C₂₀-alkyl)₄-phosphonium, (C₁-C₂₀-alkyl)_{4-z}(C₆-C₁₂-aryl)_{z}-phosphonium, (C₁-C₂₀-alkyl)_{4-z} (C₆-C₁₂-aryl)_{z}-ammonium,
L represents R⁸R⁹R¹⁰E¹(Y)ₙ, alkyl ethers, esters, alkyl- and aryl-nitriles, pyridine, piperidine, sulfoxides, sulfones, sulfimides, sulfodiimides or sulfurylides,
E¹ has the meanings given under E,
R⁸-R¹⁰ each independently of the others represents hydrogen, C₁-C₂₀-alkyl, C₂-C₃₀-alkenyl, C₃-C₈-cycloalkyl, C₆-C₁₂-aryl, C₆-C₁₂-Ar-C₁-C₂₀-alkyl, C₁-C₂₀-alkyl-C₆-C₁₂-aryl, OR¹¹,
R¹¹ represents hydrogen, C₁-C₂₀-alkyl, C₂-C₃₀-alkenyl, C₃-C₈-cycloalkyl, C₆-C₁₂-aryl, C₆-C₁₂-Ar-C₁-C₂₀-alkyl, C₁-C₂₀-alkyl-C₆-C₁₂-aryl,
Y represents R¹²R¹³C, R¹²N, oxygen, sulfur, =C=C=O, =C=C=S, =CPR¹R²R³,
R¹², R¹³ each independently of the other represents hydrogen, C₁-C₂₀-alkyl, C₂-C₃₀-alkenyl, C₃-C₈-cycloalkyl, C₆-C₁₂-aryl, C₆-C₁₂-Ar-C₁-C₂₀-alkyl, C₁-C₂₀-alkyl-C₆-C₁₂-aryl,
z represents zero or an integer from 1 to 4, and
n represents zero or 1, as initiators for the polymerisation of ethylenically unsaturated compounds.

2. Use according to claim 1 for the polymerisation and copolymerisation of cycloolefins.

3. Use according to claim 1 for the copolymerisation of cycloolefins and acyclic olefins.

4. Use according to claim 1 in the presence of an acid co-catalyst.

5. Use according to claim 1 at a temperature of from 0 to 200°C.

6. Compounds of formula (I) according to claim 1, wherein n = 1.

## Revendications

1. Utilisation de composés répondant à la formule 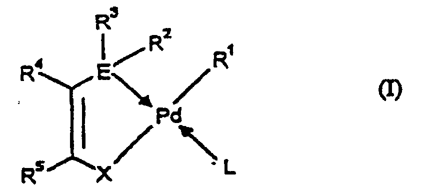 dans laquelle
E représente un atome d'azote, un atome de phosphore, un atome d'arsenic ou un atome d'antimoine,
X représente un atome d'oxygène, un groupe NR¹ ou un atome de soufre,
R¹, R², R³ représentent, indépendamment l'un de l'autre, un groupe alkyle en C₁-C₂₀, un groupe alcényle en C₂-C₃₀, un groupe cycloalkyle en C₃-C₈, un groupe aryle en C₆-C₁₂, un groupe aryl(en C₆-C₁₂)alkyle en C₁-C₂₀, un groupe alkyl(en C₁-C₂₀)aryle en C₆-C₁₂, un groupe alcoxy en C₁-C₂₀, un groupe aryl(en C₆-C₁₂)-oxy, un groupe alkyl(en C₁-C₂₀)amino, un groupe aryl(en C₆-C₁₂)amino, un groupe M-SO₃-aryle en C₆-C₁₂, et
R¹ représente, en outre, un atome d'hydrogène,
R⁴, R⁵ représentent, indépendamment l'un de l'autre, un atome d'hydrogène, un groupe alkyle en C₁-C₂₀, un groupe alcényle en C₂-C₃₀, un groupe cycloalkyle en C₃-C₈, un groupe aryle en C₆-C₁₂, un groupe aryl(en C₆-C₁₂)alkyle en C₁-C₂₀, un groupe alkyl(en C₁-C₂₀)aryle en C₆-C₁₂, un atome de chlore, un groupe OR⁶, un groupe COOR⁶, un groupe COOM, un groupe CNOR⁶₂, un groupe COR⁶, un groupe SR⁶, un groupe SO₂R⁶, un groupe OSO₂R⁶, un groupe P(O)(OR⁶)_{2-y}R⁷_{y}, un groupe CN, un groupe NHR⁶, un groupe NR⁶₂, un groupe SO₃M,
R⁶, R⁷ représentent, indépendamment l'un de l'autre, un atome d'hydrogène, un groupe alkyle en C₁-C₂₀, un groupe alcényle en C₂-C₃₀, un groupe cycloalkyle en C₃-C₈, un groupe aryle en C₆-C₁₂, un groupe aryl(en C₆-C₁₂)alkyle en C₁-C₂₀, un groupe alkyl(en C₁-C₂₀)aryle en C₆-C₁₂,
y représente 0, 1 ou 2,
M représente un métal alcalin, un semi-métal alcalino-terreux, un atome d'ammonium, un atome de phosphonium, un atome de thallium, un groupe (alkyl en C₁-C₂₀)₄-ammonium, un groupe (alkyl en C₁-C₂₀)₄-phosphonium, un groupe (alkyl en C₁-C₂₀)₄₋z-(aryl en C₆-C₁₂)_{z-}-phosphonium, un groupe (alkyl en C₁-C₂₀)_{4-z-}-(aryl en C₆-C₁₂)_{z} -ammonium,
L représente un groupe R⁸R⁹R¹⁰E¹(Y)ₙ, un groupe d'éther alkylique, un groupe ester, un groupe d'alkylnitrile et un groupe d'arylnitrile, un groupe pyridine, un groupe pipéridine, un groupe sulfoxyde, un groupe sulfone, un groupe sulfimide, un groupe sulfodiimide ou un groupe d'ylure du soufre,
E¹ représente les significations indiquées sous E,
R⁸-R¹⁰ représentent, indépendamment l'un de l'autre, un atome d'hydrogène, un groupe alkyle en C₁-C₂₀, un groupe alcényle en C₂-C₃₀, un groupe cycloalkyle en C₃-C₈, un groupe aryle en C₆-C₁₂, un groupe aryl(en C₆-C₁₂)alkyle en C₁-C₂₀, un groupe alkyl(en C₁-C₂₀)aryle en C₆-C₁₂, un groupe OR¹¹,
R¹¹ représente un atome d'hydrogène, un groupe alkyle en C₁-C₂₀, un groupe alcényle en C₂-C₃₀, un groupe cycloalkyle en C₃-C₈, un groupe aryle en C₆-C₁₂, un groupe aryl(en C₆-C₁₂)alkyle en C₁-C₂₀, un groupe alkyl(en C₁-C₂₀)aryle en C₆-C₁₂,
Y représente un groupe R¹²R¹³C, un groupe R¹²N, un atome d'oxygène, un atome de soufre, un groupe =C=C=O, un groupe =C=C=S, un groupe =CPR¹R²R³,
R¹², R¹³ représentent, indépendamment l'un de l'autre un atome d'hydrogène, un groupe alkyle en C₁-C₂₀, un groupe alcényle en C₂-C₃₀, un groupe cycloalkyle en C₃-C₈, un groupe aryle en C₆-C₁₂, un groupe aryl(en C₆-C₁₂)alkyle en C₁-C₂₀, un groupe alkyl(en C₁-C₂₀)aryle en C₆-C₁₂,
z représente 0 ou un nombre entier de 1 à 4, et
n représente 0 ou 1,
à titre d'initiateurs pour la polymérisation de composés à insaturation éthylénique.

2. Utilisation selon la revendication 1, pour la polymérisation et la copolymérisation de cyclo-oléfines.

3. Utilisation selon la revendication 1, pour la copolymérisation de cyclo-oléfines et d'oléfines acycliques.

4. Utilisation selon la revendication 1, en présence d'un cocatalyseur acide.

5. Utilisation selon la revendication 1, à une température de 0 à 200 °C.

6. Composés répondant à la formule (I) selon la revendication 1, dans lesquels n = 1.
